Europäisches Patentamt

European Patent Office

Office européen des brevets

(10)

(11) Publication number: **0 100 628**
**B2**

(12) **NEW EUROPEAN PATENT SPECIFICATION**

(45) Date of publication of the new patent specification: **23.01.91**

(51) Int. Cl.⁵: **A 01 D 89/00,** A 01 D 82/00

(21) Application number: **83304221.1**

(22) Date of filing: **20.07.83**

(54) Apparatus and method for picking up and conveying crop.

(30) Priority: **29.07.82 GB 8221910**

(43) Date of publication of application:
**15.02.84 Bulletin 84/07**

(45) Publication of the grant of the patent:
**07.01.87 Bulletin 87/02**

(45) Mention of the opposition decision:
**23.01.91 Bulletin 91/04**

(84) Designated Contracting States:
**DE FR IT NL**

(56) References cited:
EP-A-0 090 534    GB-A-2 053 645
WO-A-79/00863    GB-A-2 099 272
AT-B- 304 122    US-A-1 306 597
DE-A-2 147 375    US-A-1 807 357
DE-B-1 482 107    US-A-4 196 567
GB-A-1 149 171    US-A-4 233 803
GB-A-1 209 373    US-A-4 411 127
GB-A-1 214 840

(73) Proprietor: **NATIONAL RESEARCH DEVELOPMENT CORPORATION**
**101 Newington Causeway**
**London SE1 6BU (GB)**

(72) Inventor: **Klinner, Wilfred Erwin**
**Beechwood Heath Lane Aspley Heath Woburn**
**Sands**
**Milton Keynes Buckinghamshire (GB)**

(74) Representative: **Laight, Martin Harvey et al**
**W.H. Beck, Greener & Co. 7 Stone Buildings**
**Lincoln's Inn**
**London WC2A 3SZ (GB)**

EP 0 100 628 B2

Courier Press, Leamington Spa, England.

## Description

The present invention relates to apparatus and method for picking up and conveying crop, and relates in particular but not exclusively to apparatus including a rotor for picking up previously cut forage crops such as grass from the ground and for conveying such crops into chopping, baling or other harvesting apparatus, whether or not such action includes conditioning of the crop.

In order to make it possible for high-speed crop engaging rotors to lift fibrous crops for purposes of conveying, or treating and conveying, the material, it is necessary to provide a housing, comprising for example a hood, also known as a shroud or cowling, over at least the front part of the rotor. The shape of the hood and its relative position to the rotor, particularly the vertical clearance above the crop layer to be engaged and the radial clearance at the intake and exit regions, vitally affect the performance and power requirement of the unit as a whole. Normally, but not necessarily, the exit clearance needs to be greater than the intake clearance, so that crop can start to disengage itself from the rotor elements early, and a compact stream is formed on completion of the process. The shape of the hood in the exit region determines the trajectory of the resultant crop stream.

Because crop yields may vary from very light to exceptionally heavy, adjustment is needed in the vertical and radial clearances of the hood at the intake region. In a sparse crop, both clearances need to be small, to avoid crop being thrown forwardly and rejected by the rotor. The converse applies when bulky swaths or windrows are to be collected. In conventional machines a manual adjustment is usually provided which can be set according to estimated crop conditions.

In Austrian patent No. AT—B—304122 (equivalent to British patent No. GB—A—1214840 (Vissers)), an apparatus for cutting and conveying crop is shown, comprising a rotor mounted for rotation about an axis parallel to the ground for picking up and conveying crop, a hood extending over the front of the rotor and defining with the rotor a crop flow passage along which crop is conveyed by the rotor, and drive means rotating the rotor in a sense such that the rotor picks up the crop and carries it upwardly and rearwardly over the rotor. A forward part of the hood is hinged to the rear part of the same hood, so as to be movable during operation, but the movement is simple hinged movement giving merely the effect of a flap lifting at the front of the hood.

It is an object of the present invention to avoid or reduce the difficulties found in practice of manually adjusting the crop flow passage associated with a crop pick-up rotor.

According to the present invention there is provided apparatus for picking up and conveying crop comprising a mobile frame for movement across the ground, a conveying rotor mounted for rotation about an axis transverse to the direction of forward movement of the apparatus and substantially parallel to the ground for picking up and conveying crop, a hood extending at least around part of the front half of the rotor and defining between the hood and part of the outer periphery of the rotor a crop flow passage along which crop is conveyed by the rotor, drive means for driving the conveying rotor in rotation in a sense such that the rotor picks up crop and carries the crop upwardly and rearwardly over the rotor, and mounting means for mounting the hood so as to be moveable relative to the frame during operation, the hood being moveable in response to, and by the effect of, the crop to effect automatic adjustment of the hood position by the direct effect of the crop on the hood, the hood being mounted in such a manner that an increase in crop load increases both the vertical clearance between the front of the hood and the ground and the horizontal clearance between the front of the hood and the rotor at the entrance to the crop flow passage, characterised in that the hood is mounted in such a manner that the said increase in crop load produces movement of the hood in the direction of crop flow by movement of the whole moveable hood along a path spaced from and lying around the outer periphery of the rotor.

The movement of the hood by which the automatic adjustment of clearance is made includes a component which is a readily outward movement relative to the rotor, and it may differ in magnitude from one side and one end of the rotor housing to the other.

It is preferred that the mounting means constrains the said hood to move along a substantially predetermined path in response to, and by the effect of, changes in crop load. Adjustment means may be provided for selectively varying the predetermined path of movement of the hood. It may be arranged that the said predetermined path produces different variations of clearances at the entrance and exit of the crop flow passage during movement of the hood. In such a case there may be provide means for adjusting the relationship between the different variations in clearances at the entrance and exit of the crop flow passage.

Conveniently the relationship between the different variations in clearances at the inlet and outlet of the crop passage can be adjusted by varying the mounting of the hood.

Normally it will be arranged that the hood is movable in response to, and by the effect of, an increase in crop load to effect an overall increase in the clearance presented to the crop along the crop flow passage. By this is meant that the clearance presented to the crop along the crop passage is not normally at any point reduced in response to an increase in crop load, although it may be that the clearance is at some points unaltered. However, were it required, for example, than an increase in clearance at the front is compensated by a decrease in clearance at the rear of the housing, the present invention permits this to be achieved.

The hood may be biassed towards a position of greater restriction to crop (that is to say giving a smaller clearance for crop flow) by gravity, either alone or in combination with biassing means coupled between the frame and the hood. The additional biassing means may act to increase or decrease the biassing effect due to gravity.

The actual mounting means for the hood may take a wide variety of forms, yet still fulfil the requirements of the inveniton as set out above.

In some arrangements the mounting means may comprise at least two mounting linkages spaced apart along the direction of crop flow through the crop flow passage.

Each mounting linkage may comprise a pivotal mounting linkage which is pivoted to the hood and to the frame, the spacing between the pivots on the linkages being different for different linkages along the crop passage, so that a different variation of clearance occurs at diffemt positions along the crop passage. Each said mounting linkage may comprise an arm pivoted at one end to the hood and pivoted at the other end to the frame.

In yet another arrangement, the said mounting means may comprise spigots movably mounted in slots in substantially vertical side walls of the apparatus.

In yet other arrangements the mounting means may be formed partly or entirely by elastic links, to allow lateral differentiation in the response to different crop loads.

In one form, the said frame includes a pair of laterally spaced side walls, the said hood being wider than the lateral spacing of the side walls and on the upper edges of the side walls being arranged to form lower limit stops for the hood, movement of the hood above the side walls being produced by extension of independent elastic links in a non-predetermined path. It may be arranged that rollers or wheels are attached near the upper ends of the side walls to support and guide the overhanging hood and to minimise sliding friction, and that the rollers or wheels are made from resilient material to cushion the return movement of the hood.

It is to be appreciated that the said frame of the apparatus may include side plates of the general rotor housing.

In any of these arrangements, the hood may be biassed towards a position of greater restriction of crop by gravity, either alone or in combination with biassing means coupled between the frame and the hood or hood portion.

In some preferred arrangements, the said hood may be formed by two or more hood sections positioned transversely adjacent across the width of the apparatus relative to the intended direction of forward movement, such that the restriction on crop movement between the hood and the rotor may be varied to different extents at different positions across the width of the apparatus in dependence upon different amounts of crop presented at different positions across the width of the apparatus.

In addition to the features set out hereinbefore, it is particularly preferred that there may be provided a curtain member suspended at the front of the apparatus a head of the inlet to the crop passage between the hood and the rotor, the curtain member being movable in response to and by the effect of crop between a first position in which the curtain member hangs freely and substantially vertically and a second position in which the curtain member trails non-vertically from its suspension region and provides a guide surface above the crop leading into the crop passage between the rotor and the hood.

There is also provided in accordance with the present invention a method of picking up and conveying crop comprising the steps of moving a mobile frame across the ground, rotating a conveying rotor about an axis transverse to the direction of forward movement of the apparatus and substantially parallel to the ground for picking up and conveying crop, picking up crop by the rotor and carrying the crop upwardly and rearwardly over the rotor along a crop flow passage defined between a hood extending at least around part of the front half of the rotor, and part of the outer periphery of the rotor, and automatically adjusting the entrance to the crop flow passage by moving the hood relative to the frame during operation, in response to changes in crop load and by the direct effect of the crop of the hood, the movement of the hood being such that an increase in crop load increases both the vertical clearance between the front of the hood and the ground and the horizontal clearance between the front of the hood and the rotor at the entrance to the crop flow passage characterised by effecting movement of the hood such that the said increase in crop load produces movement of the hood in the direction of crop flow by movement of the whole moveable hood along a path spaced from and lying around the outer periphery of the rotor.

In general, those features of the invention which have been set out with regard to the apparatus aspects of the invention, are also provided in accordance with the method aspects of the invention.

The rotor referred to above may comprise for example a rotor having a plurality of outwardly directed spring steel tines for picking up cut fodder crop such as grass. However the invention is particularly applicable when used with a rotor as set out in our published UK Patent 1322165, comprising a plurality of outwardly directed metal spokes in the form of V-shaped crop engaging elements, or a rotor as set out in our published pending UK Patent Application No. 2075816A, which comprises a brush-like structure having a multiplicity of stiff resilient elongate elements which are arranged in tufts of brush elements spaced apart along the axis of the rotor; or a rotor as set out in our published pending UK Patent Application Nos. 2099272A and 2107963A, both of which disclose pick-up and conditioning rotors in which the crop engaging elements are formed of thick, stiff, plastics sheeting.

Embodiments of the invention will now be described by way of example with reference to the accompanying drawings, in which:

Figure 1 is a diagrammatic side view of apparatus for picking up and conveying cut crop, embodying the invention, and shows a movable curved hood in front of and partly above a rotor;

Figure 2 is a diagrammatic side view of a further apparatus embodying the invention for picking up cut crop, and also shows means for returning to the main crop stream any stray crop which falls from the main output stream of a pick-up rotor;

Figs. 3 and 3(a) are perspective views from the front and side respectively of a further embodiment of the invention for picking up cut crop and shows a movable curved hood in front of and partly above a rotor;

Fig. 4 is a diagrammatic side view of the apparatus shown in Figs. 3 and 3(a); and

Figs. 5(a) and 5(b) are diagrammatic side and front views respectively of a further modification of a crop pick up apparatus embodying the invention.

There is shown a crop pick-up apparatus comprising a rotor 11 mounted on a mobile main frame (not shown) for movement over the ground 13 to pick-up previously cut crop. A hood assembly or rotor housing is indicated generally at 15, and includes an overhead baffle or deflector 17. There is also provided a freely-hanging, stiff curtain member 19 suspended from a transverse pivot bar 20.

The rotor 11 preferably consists of a plurality of stiff resilient outwardly directed crop engaging elements, the outer periphery of which is indicated by a broken line 21. Conveniently the rotor 11 comprises a pick-up rotor as disclosed in one of our published UK Patent Application No. 2075816A, 2099272A and 2107963A. The rotor 11 is rotated in a clockwise direction so as to pick-up cut crop from the ground and to convey the crop upwardly and rearwardly over the rotor 11.

The crop material is conveyed upwardly and to the rear of the apparatus beneath the baffle or deflector 17 above the rotor. The deflector 17 may be a flat or curved plate. The gap shown and indicated at 24 allows the operator to see the crop stream to check operation, and also facilitates, if desirable, the introduction and even distribution of additives in liquid or solid form.

The protective curtain 19 is suspended from the rigid bar 20 preceding the rotor 11. The curtain 19 serves the additional purpose of guiding the crop. The curtain 19 is shown in its rest position in full lines, and in broken lines there is shown the normal deflected position of the curtain 19 during forward movement of the apparatus over crop.

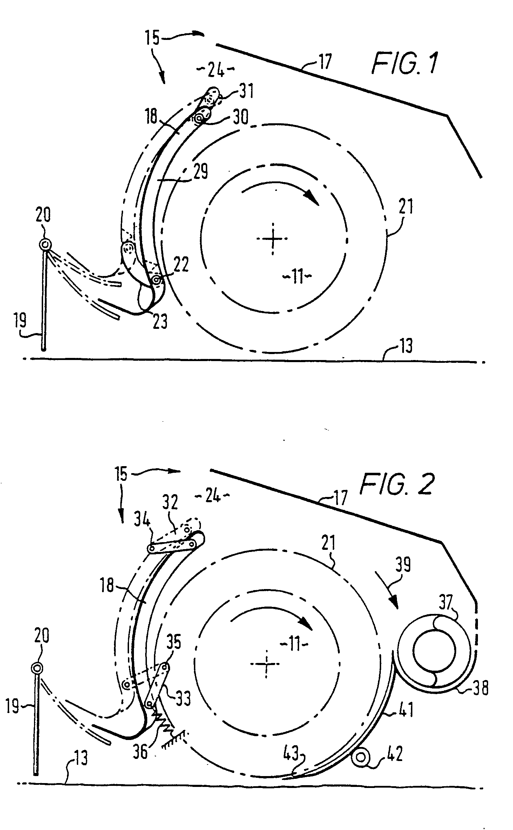

In Figure 1, a hood 18 with side flanges 29 is shown to be located by spigots 22 in lower arcuate slots 23, and by spigots 30 in upper linear slots 31. The extreme position to which the hood member 18 can be moved in response to increased crop pressure is shown in broken lines. It will be seen that the upper clearance of the hood 18 from the rotor 11, and also the angle of the hood 18, have changed with movement of the hood 18 from the full line to the broken line positions, in addition to the change brought about at the lower end of the hood 18. By selecting differing shapes, angles and lengths of slots, a range of effects may be achieved in the movement of the hood 18. Again, spring loading of the hood 18 to increase or decrease its resistance to deflection, may be provided. For rotors 11 which are intended to treat the crop, for example by conditioning the crop, a transverse cracking bar may be provided at the lower portion of the hood 18; the bar may be continuous or may provide an intermittent edge.

Figure 2 shows a further modification of the apparatus described thus far, and discloses firstly a modification of the mounting for the hood 18 of Figure 1. In Figure 2 the hood 18 is shown to be suspended and pivoted on upper and lower link arms 32 and 33 which are pivoted respectively at fixed pivot points 34 and 35 which are fixed relative to the main frame (not shown). The upper and lower link arms 32 and 33 are so dimensioned and angled that, by way of example, the upper end of the hood 18 moves slightly further away from the periphery 21 of the rotor 11 than does the lower end of the hood 18, during movement · of the hood 18 from the full line position to the broken line position shown. Also by way of example, the hood 18 is shown to be spring loaded to increase its resistance to deflection, the spring loading being shown diagrammatically at 36.

It should be appreciated that other forms of hood suspension may be used, including suspensions consisting mainly or entirely of springs or elastomeric elements, to make the hood responsive to changes of load. Elastic links allow additional lateral differentiation in the response to different crop loads.

Figure 2 also illustrates a feature concerned with the collection of stray pieces of crop which may escape from the main stream of crop leaving the pick-up rotor. To the rear of the pick-up rotor 11 there is shown a transverse auger 37 which has beneath it a conventional concave trough 38. The main crop stream may will leave the rotor 11 generally along the direction indicated diagrammatically by the arrow 39, but some stray pieces of crop will fall downwardly with the rotating rotor 11 and would normally fall to the ground in a region indicated diagrammatically at 40. However, in the embodiment of Figure 2 there is provided a further concave guide member 41 which leads around, and is spaced from the underside of the rotor 11. The guide member 41 leads from the forward edge of the trough 38 and terminates just rearwardly of the bottom dead centre position of the rotor 11. A supporting member 42 is positioned to the rear of the guide member 41. The guide member 41 collects stray pieces of crop material and forces them to be guided downwardly and forwardly by the rotor 11 to be re-introduced into the crop layer in front of the rotor 11. For minimum stubble resistance, the guide member 41 may be sharpened at its lower leading edge 43. The support member 42 behind the guide member 41 maintains the guide member 41 in fixed relationship with the rotor 11.

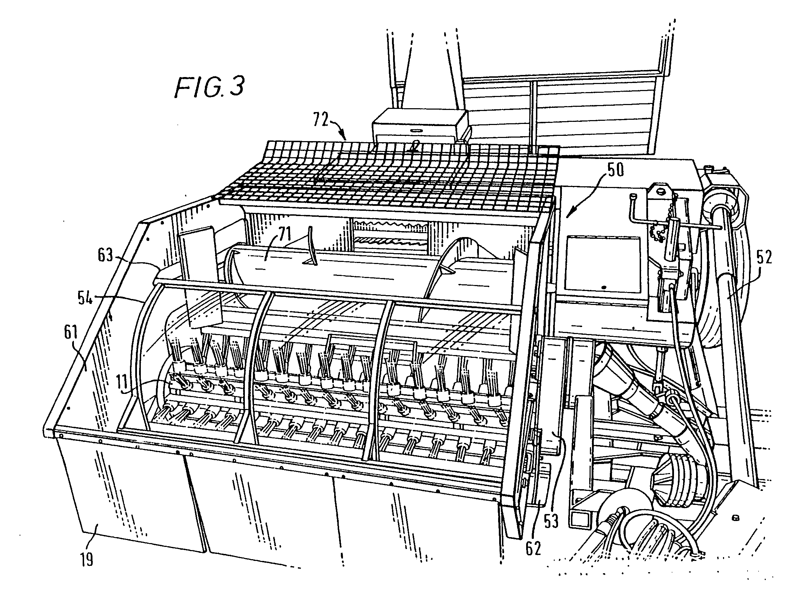

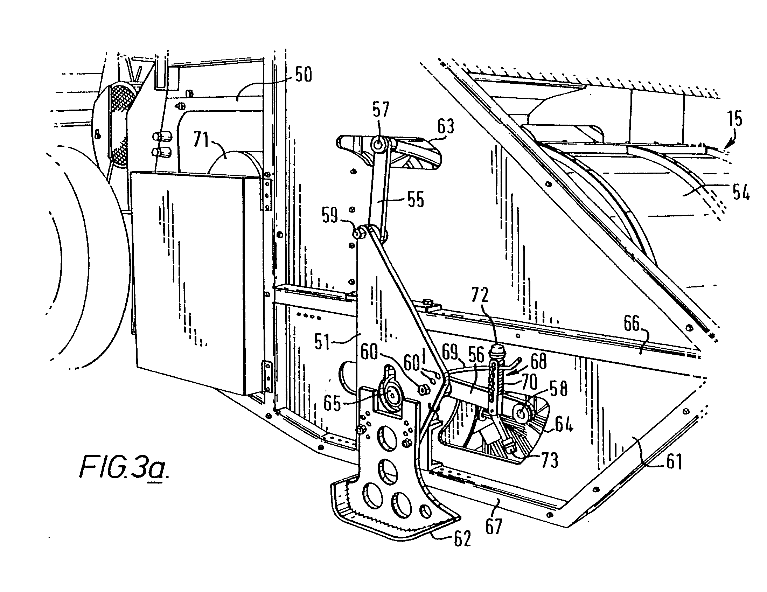

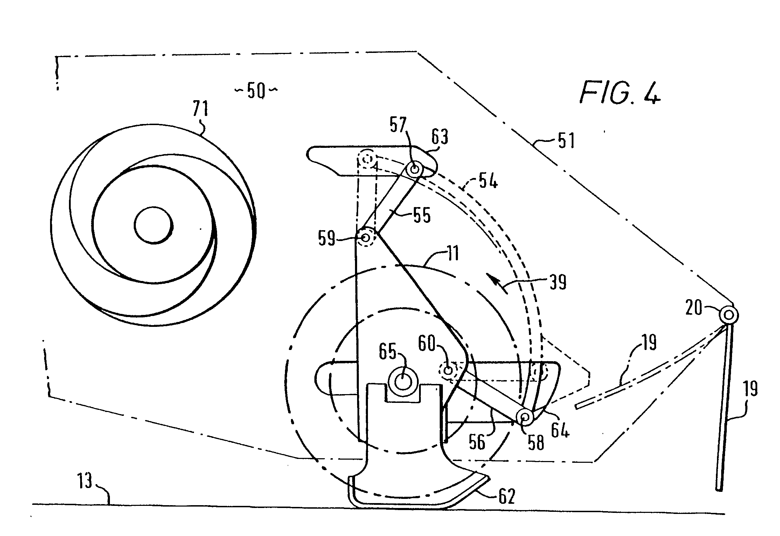

There will now be described with reference to Figures 3, 3a and 4 a further embodiment of the invention which corresponds generally to the embodiments shown in Figures 1 and 2, and consists of a crop pick-up apparatus which has been found of particular advantage in practice.

The general main frame of the apparatus is referred to by the numeral 50, and a pick-up rotor 11 is mounted between substantial side plates 51 of the frame 50 and is driven from the pto 52 of a tractor through a conventional drive linkage terminating at 53 (Figure 3). The rotor 11 is formed of a brush-like structure as set out in our previous published UK Patent Application No. 2075816A, although the crop engaging elements need not necessarily be multi-filamented brush tufts but can be of alternative construction (including a one-piece construction) and can be made from flexible material or resiliently mounted rigid material, and in such cases are preferably shaped to be tapering towards their crop engaging tips, to assist crop detachment and transfer into, for example, a forage harvester feed mechanism.

Referring to Figures 3 and 3(a) a curved hood 54 extends over the front of the rotor 11, and in the paticular example shown is formed of transparent synthetic plastics material, which allows an operator of the apparatus to view the operation of the rotor. Referring to Figure 3(a), the hood 54 is mounted by two pivoted arms 55 and 56 to the side plate 51 of the main frame 50, and corresponding pivoted arms are provided on the other side of the apparatus. The pivot arm 55 is pivoted to the hood 54 at a pivot 57, and to the side plate 51 at a pivot 59, and the arm 56 is correspondingly pivoted at pivots 58 and 60. Provision is made at apertures 60' for the pivot point 60 to be moved relative to the side plate 51.

The main structure is completed by side panels 61 and side skids 62, repeated on the other side of the apparatus.

In Figure 3, the hood 54 is shown at its lowermost and most forward position, and the hood is shown at this position in Figure 4 in full lines. The hood 54 is movable by pivoting on the arms 55 and 56, the pivots 57 and 58 moving in slots 63 and 64 in side panels 61 of the apparatus, of which one is shown in Figure 3(a). The side panels 61 are held in frames having horizontal cross members 66 and 67, and movement of the hood 64 is limited by stops 72 and 73 carried on the arm 56, and bearing against the cross member 66 and 67. A biasing device 68 is linked by an arm 69 to the side frame 51, and biases the hood into the forward and downward position by the effect of the spring 70 acting between the base of the biasing means 68 and the link 69. The apparatus is supported on skids 62 of which one is shown in Figure 3(a) secured to the side plate 51.

As shown in Figure 4, in operation crop is picked up by the rotor 11 and lifted upwardly and rearwardly over the rotor 11 in the direction of the arrow 39 and is fed to an auger 71 which feeds the crop towards a conventional chopping mechanism of a forage harvester, indicated generally at 72 in Figure 3. As has been explained previously, where the crop load is light, the hood 54 will be in its forward and lower position, but where the crop is heavier, either with a greater bulk or higher friction, or a combination of both, the hood 54 will rise upwardly and rearwardly to allow greater clearances in the crop passage between the hood 54 and the rotor 11.

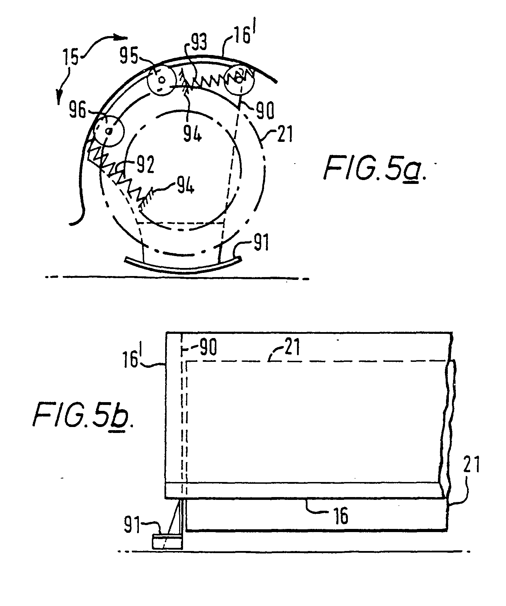

In Figure 5(a) and 5(b) there are shown in diagrammatic side cross section and front view respectively a pick-up rotor for picking up crop on the ground, and embodying the invention. Side plates 90 attached to a ground skid 91 on each side of the apparatus are shaped at the top to support a rotor hood 16' which laterally overhangs the side plates 90. The hood 16' is secured only by two or more springs 92 and 93 which are shown diagrammatically coupled between the hood 16' and securing portions 94 of the side plates 90. The directional pull of the springs 92 and 93 is arranged to be downwardly and forwardly at the front against limit stops (not shown) and towards the rotor centre against resilient buffers (also not shown) which prevent noise arising from metal-to-metal contact. Small rubber wheels or rollers 95 and 96 produce the desired damping effect and reduce sliding friction of the hood 16' sliding across the top of the side plates 90. Thus the hood 16' is free to respond to varying crop loads by lifting at one side or both sides as far around the covered rotor periphery as the load dictates. The springs and their direction of fitting shown are merely an example, and it should be noted that compression or tension springs can be used, including telescopic spring loaded arms. It should also be noted that the rotor hood 16' may have one or more transverse hinges (not shown) which, in combination with the springs arranged to act near the hinges axes, to give maximum freedom of response.

With reference to Figures 5(a) and (b), there is provided in essence, a rotor cover which is wider than the lateral spacing of the rotor housing side plates, so that the upper edges of the side plates form the lower limit stops and movement of the housing above the side plates can correspond to the extension of independent elastic links in a non-predetermined path. Advantageously rollers or wheels attached near the upper ends of the side plates support and guide the overhanging rotor cover and minimise sliding friction. The rollers or wheels may be made from resilient material to cushion the return movement of the rotor housing.

It is to be appreciated that where there is provided a resiliently suspended hood or rotor cover, there can be a difference in one or other of the horizontal and vertical clearance from one side of the side of the hood to the other transversely across the machine.

EP 0 100 628 B2

Various references are made in this specification to variations in crop load. By the term crop load is meant the amount and/or the nature of the crop picked up and conveyed by the rotor. For example the crop load may be increased by an increase in the amount of crop conveyed by the rotor, or by an increase in the friction exerted by the crop conveyed by the rotor, or by both factors. Friction may be increased for example by an increase in wetness of the crop.

## Claims

1. An apparatus for picking up and conveying crop comprising a mobile frame (50) for movement across the ground, a conveying rotor (11) mounted for rotation and about an axis transverse to the direction of forward movement of the apparatus and substantially parallel to the ground for picking up and conveying crop, a hood (18, 54) extending at least around part of the front half of the rotor (11) and defining between the hood (18, 54) and part of the outer periphery (21) of the rotor (11) a crop flow passage along which crop is conveyed by the rotor (11), drive means (52, 53) for driving the conveying rotor (11) in rotation in a sense that the rotor (11) picks up crop and carries the crop upwardly and rearwardly over the rotor (11), and mounting means for mounting the hood (18, 54) so as to be moveable relative to the frame (50) during operation, the hood (18, 54) being moveable in response to, and by the effect of, the crop to effect automatic adjustment of the hood position by the direct effect of the crop on the hood (18, 54), the hood (18, 54) being mounted in such a manner that an increase in crop load increases both the vertical clearance between the front of the hood (18, 54) and the ground and the horizontal clearance between the front of the hood (18, 54) and the rotor (11) at the entrance to the crop flow passage, characterised in that the hood (18, 54) is mounted in such a manner that the said increase in crop load produces movement of the hood (18, 54) in the direction of crop flow by movement of the whole moveable hood (18, 54) along a path spaced from and lying around the outer periphery (21) of the rotor (11).

2. Apparatus according to Claim 1 in which the said mounting means (22, 23, 30, 31; 55, 56) constrains the hood (18, 54) to move along a substantially predetermined path in response to, and by the effect of, changes in crop load.

3. Apparatus according to Claim 2 in which the said predetermined path produces different variations of clearances at the entrance and exit of the crop flow passage during movement of the hood (18, 54).

4. Apparatus according to Claim 3 including means (60') for adjusting the relationship between the different variations in clearances at the entrance and exit of the crop flow passage.

5. Apparatus according to any preceding claim in which the said hood (18, 54) is movable in response to, and by the effect of, an increase in crop load to effect an overall increase in the clearance presented to the crop along the crop flow passage.

6. Apparatus according to any preceding claim including means (68) for biasing the hood (18, 54) towards a position of greater restriction to crop flow.

7. Apparatus according to any preceding claim in which the said mounting means comprises at least two mounting linkages (55, 56) spaced apart along the direction of crop flow through the crop flow passage.

8. Apparatus according to Claim 7 in which each mounting linkage is a pivotal mounting linkage pivoted to the hood (18, 54) and to the frame, the spacing between the pivots (57, 59, 58 or 60) on the linkages (55, 56) being different for different linkages (55, 56) along the crop passage, so that a different variation of clearance occurs at different positions along the crop passage.

9. Apparatus according to Claim 7 or 8 in which each said mounting linkage comprises arms (32, 33, 55, 56) pivoted at one end to the hood (18, 54), and pivoted at the other end to the frame (50).

10. Apparatus according to any of Claims 1 to 8 in which the said mounting means comprises spigots (22, 30) moveably mounted in slots (23, 31) in substantially vertical side walls of the apparatus.

11. Apparatus according to Claim 1 in which the said mounting means are formed partly or entirely by elastic links (92, 93), to allow lateral differentiation in the response to different crop roads.

12. Apparatus according to Claim 11 in which the said frame includes a pair of laterally spaced side walls (90), the said hood (16') being wider than the lateral spacing of the side walls (90) and the upper edges of the side walls (90) being arranged to form lower limit stops for the hood (16'), movement of the hood (16') above the side walls being produced by extension of independent elastic links (92, 93) in a non-predetermined path.

13. A method of picking up and conveying crop comprising the steps of moving a mobile frame (50) across the ground, rotating a conveying rotor (11) about an axis transverse to the direction of forward movement of the apparatus and substantially parallel to the ground for picking up and conveying crop, picking up crop by the rotor and carrying the crop upwardly and rearwardly over the rotor along a crop flow passage defined between a hood (18, 54), extending at least around part of the front half of the rotor, and part of the outer periphery (21) of the rotor (11), and automatically adjusting the entrance to the crop flow passage by moving the hood (18, 54) relative to the frame (50) during operation, in response to changes in crop load and by the direct effect of the crop on the hood, the movement of the hood (18, 54) being such that an increase in crop load increases both the vertical clearance between the front of the hood (18, 54) and the ground and the horizontal clearance between the front of the hood (18, 54) and the rotor (11) at the entrance to the crop flow passage, characterised by effecting movement of the hood that the said increase in crop load produces movement of the hood (18, 54) in the direction of crop flow by movement of the whole moveable hood (18, 54) along a path spaced from and lying around the outer periphery (21) of the rotor (11).

14. A method according to Claim 13 including the step of effecting movement of the hood along a substantially predetermined path in response to and by the effect of changes in crop load.

15. Apparatus according to Claim 13 or 14 including the step of moving the hood in response to an increase in crop load so as to effect an overall increase in the clearance presented to the crop along the crop flow passage.

**Patentansprüche**

1. Vorrichtung zum Aufnehmen und Fördern von Erntegut mit einem beweglichen Rahmen (50) zur Bewegung über den Erdboden, einem fördernden Rotor (11), der zur Drehung um eine Achse quer zur Richtung der Vorwärtsbewegung der Vorrichtung und im wesentlichen parallel zum Erdboden zum Aufnehmen und Fördern von Erntegut gelagert ist, eine Haube (18, 54), die sich wenigstens um den Teil der vorderen Hälfte des Rotors (11) erstreckt und zwischen der Haube (18, 54) und dem Teil des Außenumfangs (21) des Rotors (11) einen Erntegutfließkanal aufweist, längs dessen das Erntegut durch den Rotor (11) gefördert wird, Antriebseinrichtungen (52, 53) zum Antrieb des fördernden Rotors (11) in Drehung in einer Richtung, derart, daß der Rotor (11) Erntegut aufnimmt und das Erntegut nach oben und hinten über den Rotor (11) trägt und Lagerungseinrichtungen zum Lagern der Haube (18, 54), so daß diese relativ zum Rahmen (50) während des Betriebs beweglich ist, wobei die Haube (18, 54) abhängig hierzu und aufgrund der Wirkung des Ernteguts beweglich ist, um eine selbsttätige Verstellung der Haubenposition durch direkte Wirkung des Ernteguts auf die Haube (18, 54) vorzunehmen, wobei die Haube (18, 54) derart gelagert ist, daß eine Zunahme in der Erntegutlast sowohl den vertikalen Abstand zwischen der Frontseite der Haube (18, 54) und dem Erdboden und dem horizontalen Abstand zwischen der Frontseite der Haube (18, 54) und dem Rotor (11) am Eintritt in den Erntegutlaufkanal erhöht, dadurch gekennzeichnet, daß die Haube (18, 54) derart gelagert ist, daß diese Zunahme in der Erntegutlast eine Bewegung der Haube (18, 54) in Richtung des Erntegutflusses durch die Bewegung der gesamten beweglichen Haube (18, 54) längs einer Bahn erzeugt, die unter Abstand vom Außenumfang (21) des Rotors (11) und um dessen Außenumfang (21) gelegt ist.

2. Vorrichtung nach Anspruch 1, wobei diese Lagerungseinrichtung (22, 23, 30, 31; 55, 56) die Haube (18, 54) zwingt, sich längs eines im wesentlichen vorbestimmten Weges und abhängig von und durch den Einfluß von Änderungen in der Last des Erntegutes zu bewegen.

3. Vorrichtung nach Anspruch 2, dadurch gekennzeichnet, daß diese vorbestimmte Bahn unterschiedliche Veränderungen des jeweiligen Spaltes oder Freiraums am Eintritt und Austritt des Erntegutströmungskanals während der Bewegung der Haube (18, 54) erzeugt.

4. Vorrichtung nach Anspruch 3, mit Einrichtungen (60') zum Einstellen des Verhältnisses zwischen den verschiedenen Änderungen im jeweiligen Spalt am Eintritt und Austritt des Erntegutströmungskanals.

5. Vorrichtung nach einem der vorhergehenden Ansprüche, wobei diese Haube (18, 54) abhängig von und aufgrund des Einflusses von einer Zunahme in der Erntegutbelastung beweglich ist, wodurch ein Gesamtanstieg in dem dem Erntegut gebotenen Spalt oder Freiraum längs des Erntegutströmungskanals herbeigeführt wird.

6. Vorrichtung nach einem der vorhergehenden Ansprüche, mit Einrichtungen (68), um die Haube (18, 54) gegen eine Stellung größerer Verengung für die Erntegutströmung vorzuspannen.

7. Vorrichtung nach einem der vorhergehenden Ansprüche, wobei diese Lagerungseinrichtung wenigstens zwei Lagerungsgestänge (55, 56) aufweist, die unter Abstand längs der Richtung der Erntegutströmung durch den Erntegutströmungskanal angeordnet sind.

8. Vorrichtung nach Anspruch 7, dadurch gekennzeichnet, daß jedes Lagerungsgestänge ein an der Haube (18, 54) und dem Rahmen schwenkbar gelagertes Schwenkgestänge ist, wobei der Abstand zwischen den Schwenkzapfen (57, 59, 58 oder 60) auf den Gestängen (55, 56) unterschiedlich für unterschiedliche Gestänge (55, 56) längs des Erntegutdurchlasses ist, so daß eine unterschiedliche Spaltveränderung an unterschiedlichen Stellen längs der Erntegutbahn auftritt.

9. Vorrichtung nach Anspruch 7 oder 8, wobei jedes dieser Lagerungsgestänge Arme (32, 33, 55, 56) umfaßt, die an einem Ende an der Haube (18, 54) verschwenkbar sind und am anderen Ende am Rahmen (50) verschwenkbar angelenkt sind.

10. Vorrichtung nach einem der Ansprüche 1 bis 8, wobei diese Lagerungseinrichtung Zapfen (22, 30) umfaßt, die in Schlitzen (23, 31) beweglich in im wesentlichen vetikalen Seitenwandungen der Vorrichtung gelagert sind.

11. Vorrichtung nach Anspruch 1, dadurch gekennzeichnet, daß diese Lagerungseinrichtungen teilweise oder vollständig durch elastische Glieder (92, 93) gebildet sind, um ein seitlich differenziertes Verhalten, abhängig von unterschiedlichen Erntegutlasten, zu ermöglichen.

12. Vorrichtung nach Anspruch 11, wobei dieser Rahmen ein Paar seitlich unter Abstand angeordnete Seitenwandungen (90) umfaßt, wobei diese Haube (16') breiter als der seitliche Abstand der Seitenwandungen (90) sowie der oberen Ränder der Seitenwandungen (90) ist und daß die oberen Ränder der Seitenwandungen (90) so angeordnet sind, daß sie untere Begrenzungsanschläge für die Haube (16') bilden und die Bewegung der Haube (16') oberhalb der Seitenwandungen durch Ausfahren unabhängiger elastischer Glieder (92, 93) in einem nicht bestimmten Weg erzeugt wird.

13. Verfahren zum Aufnehmen und Fördern von Erntegut, umfassend die folgenden Stufen: Bewegen eines beweglichen Rahmens (50) quer über den Erdboden; Drehen eines Förderrotors (11) um eine Achse quer zur Richtung der Vorwärtsbewegung der Vorrichtung und im wesentlichen parallel zum Erdboden zum Aufnehmen und Fördern von Erntegut; Aufnehmen von Erntegut durch den Rotor und Tragen des Erntegutes nach oben und hinten über den Rotor längs eines Erntegutströmungskanals, der zwischen einer Haube (18, 54), die sich wengistens um Teil der vorderen Hälfte des oberen Rotors und Teil des Außenumfangs (21) des Rotors (11) erstreckt, gebildet ist und selbsttätiges Einstellen des Eintritts des Erntegutströmungskanals durch Bewegen der Haube (18, 54) relativ zum Rahmen (50) während des Betriebs, abhängig von Änderungen in der Erntegutlast sowie aufgrund des direkten Einflusses des Ernteguts auf die Haube, wobei die Bewegung der Haube (18, 54) derart ist, daß eine Zunahme in der Erntegutlast sowohl den vertikalen Abstand bzw. Freiraum zwischen der Vorderseite der Haube (18, 54) und dem Erdboden sowie dem horizontalen Spalt zwischen der Vorderseite der Haube (18, 54) und dem Rotor (11) am Eintritt zum Erntegutströmungskanal vergrößert, dadurch gekennzeichnet, daß die Bewegung der Haube derart ausgeführt wird, daß diese Zunahme in der Erntegutlast eine Bewegung der Haube (18, 54) in der Richtung der Erntegutströmung durch die Bewegung der gesamten beweglichen Haube (18, 54) längs eines Weges erzeugt, der unter Abstand zum Außenumfang (21) des Rotors (11) sich befindet und um diesen herum liegt.

14. Verfahren nach Anspruch 13, umfassend die Schritte: Vornahme der Bewegung der Haube längs einer im wesentlichen vorbestimmten Bahn in Abhängigkeit von und unter der Wirkung von Änderungen in der Last des Ernteguts.

15. Vorrichtung nach Anspruch 13 oder 14, umfassend die folgenden Schritte: Bewegen der Haube, abhängig von einer Steigerung in der Last des Ernteguts, derart, daß eine Gesamtsteigerung im Spalt oder Freiraum bewirkt wird, der sich dem Erntegut längs des Erntegutströmungsweges bietet.

## Revendications

1. Appareil pour ramasser et transporter une récolte comprenant un bâti mobile (50) pour se déplacer à travers le terrain, un rotor transporteur (11) monté pour pouvoir tourner autour d'un axe transversal au sens du mouvement en avant de l'appareil et sensiblement parallèle au sol pour ramasser et transporter la récolte, un capot (18, 54) s'étendant au moins autour d'une partie de la moitié avant du rotor (11) et déterminant entre le capot (18, 54) et une partie du contour extérieur (21) du rotor (11) un passage d'écoulement de récolte le long duquel la récolte est transportée par le rotor (11), des moyens d'entraînement (52, 53) pour entraîner le rotor transporteur (11) en rotation dans un sens tel que le rotor (11) ramasse la récolte et transporte la récolte vers le haut et vers l'arrière par dessus le rotor (11), et des moyens de montage pour monter le capot (18, 54) de manière à ce qu'il soit mobile par rapport au bâti (50) pendant le fonctionnement, le capot (18, 54) étant mobile en réponse à, et sous l'effet de, la récolte pour effectuer un réglage automatique de la position du capot par l'effet direct de la récolte sur le capot (18, 54), le capot (18, 54) étant monté de façon telle qu'une augmentation de la charge de récolte augmente à la fois le dégagement vertical entre l'avant du capot (18, 54) et le sol et le dégagement horizontal entre l'avant du capot (18, 54) et le rotor (11) à l'entrée du passage d'écoulement de récolte, caractérisé en ce que le capot (18, 54) est monté de telle manière que ladite augmentation de la charge de récolte produit un mouvement de capot (18, 54) dans le sens d'écoulement de la récolte par mouvement de l'ensemble du capot mobile (18, 54) le long d'un parcours espacé de et placé autour du contour extérieur (21) du rotor (11).

2. Appareil selon la revendication 1 dans lequel lesdits moyens de montage (22, 23, 30, 31; 55, 56) forcent le capot (18, 54) à se déplacer le long d'un parcours sensiblement prédéterminé en réponse à, et par l'effet de variations de la charge de récolte.

3. Appareil selon la revendication 2 dans lequel ledit parcours prédéterminé produit différentes variations de dégagements à l'entrée et à la sortie du passage d'écoulement de récolte pendant le mouvement du capot (18, 54).

4. Appareil selon la revendication 3 comprenant des moyens (60') pour régler le rapport entre les différentes variations de dégagements à l'entrée et à la sortie du passage d'écoulement de récolte.

5. Appareil selon l'une quelconque des revendications précédentes, dans lequel ledit capot (18, 54) est mobile en réponse à, et par l'effet de, une augmentation de la charge de récolte pour effectuer une augmentation d'ensemble du dégagement présenté à la récolte le long du passage d'écoulement de récolte.

6. Appareil selon l'une quelconque des revendications précédentes, comprenant des moyens (68) pour solliciter le capot (18, 54) vers une position de plus grande restriction de l'écoulement de récolte.

7. Appareil selon l'une quelconque des revendications précédentes, dans lequel lesdits moyens de montage comprennent au moins deux articulations de montage (55, 56) espacées le long du sens d'écoulement de récolte à travers le passage d'écoulement de la récolte.

8. Appareil selon la revendication 7 dans lequel chaque articulation de montage est une articulation de montage à pivot pivotant par rapport au capot (18, 54) et au bâti, l'espacement entre les pivots (57, 59, 58 ou 60) sur l'articulation (55, 56) étant différent pour les différentes articulations (55, 56) le long du passage de la récolte, de sorte qu'une variation différente de dégagement se produit en différentes positions le long du passage de la récolte.

9. Appareil selon la revendication 7 ou 8 dans lequel chaque articulation de montage comprend des bras (32, 33, 55, 56) pivotant à une extrémité par rapport au capot (18, 54), et pivotant à l'autre extrémité par rapport au bâti (50).

10. Appareil selon l'une quelconque des revendications 1 à 8 dans lequel lesdits moyens de montage comprennent des broches (22, 30) montées de manière mobile dans des fentes (23, 31) dans des parois latérales sensiblement verticales de l'appareil.

11. Appareil selon la revendication 1 dans lequel lesdits moyens de montage sont formés partiellement ou entièrement par des articulations élastiques (92, 93), pour permettre une différenciation latérale en réponse à différentes charges de récolte.

12. Appareil selon la revendication 11 dans lequel ledit bâti comprend une paire de parois latérales espacées latéralement (90), ledit capot (16') étant plus large que l'espacement latéral des parois latérales (90) et les bords supérieurs des parois latérales (90) étant disposés pour former des butées inférieures pour le capot (16'), le mouvement du capot (16') au-dessus des parois latétales étant produit par l'extension d'articulations élastiques indépendantes (92, 93) dans une trajectoire non-prététerminée.

13. Procédé de ramassage et de transport de récolte comprenant les étapes de déplacement d'un bâti mobile (50) à travers le terrain, de rotation d'un rotor transporteur (11) autour d'un axe transversal au sens du mouvement en avant de l'appareil et sensiblement parallèle au sol pour ramasser et transporter la récolte, de ramassage de la récolte par le rotor et de transporter la récolte vers le haut et vers l'arrière par-dessus le rotor le long d'un passage d'écoulement de la récolte déterminé entre un capot (18, 54), s'étendant au moins autour d'une partie de la partie avant du rotor, et une partie du contour extérieur (21) du rotor (11), de réglage automatique de l'entrée dans le passage d'écoulement de récolte en déplaçant le capot (18, 54) par rapport au bâti (50) pendant le fonctionnement, en réponse à des changements de la charge de récolte et par l'effet direct de la récolte sur le capot, le mouvement du capot (18, 54) étant tel qu'une augmentation de la charge de récolte augmente à la fois le dégagement vertical entre l'avant du capot (18, 54) et le sol et le dégagement horizontal entre l'avant du capot (18, 54) et le rotor (11) au niveau de l'entrée dans le passage d'écoulement de récolte, caractérisé par l'exécution d'un mouvement du capot de sorte que ladite augmentation de la chrge de récolte produit un mouvement du capot (18, 54) dans le sens d'écoulement de récolte, par mouvement de l'ensemble du capot mobile (18, 54) le long d'un parcourts espacé de et placé autour du contour extérieur (21) du rotor (11).

14. Procédé selon la revendication 13 comprenant l'étape d'exécution d'un mouvement du capot le long d'un parcours sensiblement prédéterminé en réponse à et par l'effet de changements dans la charge de récolte.

15. Procédé selon la revendication 13 ou 14 comprenant l'étape de déplacement du capot en réponse à une augmentation de la charge de récolte de manière à effectuer une augmentation d'ensemble du dégagement présenté à la récolte le long du passage d'écoulement de récolte.

*FIG.1*

*FIG. 2*

FIG.3

FIG.3a.

FIG. 4

EP 0 100 628 B2

FIG.5a.

FIG.5b.